Europäisches Patentamt

(19) European Patent Office

Office européen des brevets

(11) Numéro de publication: **0 263 860**
**B1**

(12) **FASCICULE DE BREVET EUROPEEN**

(45) Date de publication du fascicule du brevet: **16.01.91**

(51) Int. Cl.⁵: **B 29 C 67/14,** B 29 C 53/12

(21) Numéro de dépôt: **87902537.7**

(22) Date de dépôt: **07.04.87**

(86) Numéro de dépót international:
**PCT/FR87/00112**

(87) Numéro de publication internationale:
**WO 87/06184 22.10.87 Gazette 87/23**

(54) **PROCEDES ET DISPOSITIFS POUR LA FABRICATION ET, LA POSE D'ARMURES DE RENFORCEMENT ET ELEMENTS CINTRES RENFORCES DE PLUSIEURS BARRES POUR CORPS ALLONGES FLEXIBLES.**

(30) Priorité: **08.04.86 FR 8605093**
**08.04.86 FR 8605094**
**08.04.86 FR 8605095**

(43) Date de publication de la demande:
**20.04.88 Bulletin 88/16**

(45) Mention de la délivrance du brevet:
**16.01.91 Bulletin 91/03**

(84) Etats contractants désignés:
**AT BE CH DE FR GB IT LI LU NL SE**

(56) Documents cités:
**EP-A-0 001 894**
**DE-A-2 928 759**
**FR-A-2 210 266**
**FR-A-2 210 267**
**FR-A-2 229 913**
**FR-A-2 312 356**
**FR-A-2 494 401**
**US-A-3 810 805**
**US-A-4 291 728**

(73) Titulaire: **INSTITUT FRANCAIS DU PETROLE**
**4, Avenue de Bois-Préau**
**F-92502 Rueil-Malmaison (FR)**

(72) Inventeur: **HUVEY, Michel**
**2, avenue des Pinsons**
**F-78380 Bougival (FR)**

Courier Press, Leamington Spa, England.

## Description

La présente invention concerne un procédé, un moule-support profilé comportant plusieurs gorges pour fabriquer des barres incurvées profilées, à section constante ou non constante, en matière armée de filaments, et un ensemble unitaire comportant le moule-support comportant au moins deux barres profilées.

La présente invention concerne, en outre, un procédé et un dispositif permettant de poser facilement des barres de renfort intervenant dans des corps comportant des armures de renforcement. Plus particulièrement, ces derniers procédé et dispositif sont utilisés pour la fabrication de nappes de renforts de corps de révolution tel une conduite flexible dont les nappes sont composées d'un grand nombre de barres de renfort.

La présente invention concerne aussi des corps renforcés comportant une armature de renforcement réalisée avec au moins un élément profilé allongé cintré renforcé de plusieurs barres, tel un moule-support. Plus particulièrement, ces corps renforcés peuvent être des conduites étanches flexibles légères comportant des armatures de renforcement destinées à supporter les efforts de traction et ayant une haute résistance par enroulement hélicoïdal des barres profilées.

On a déjà proposé, par exemple dans le brevet français FR-A-2.312.356, de réaliser un profilé en matière plastique armée en garnissant d'un mélange de filament de haute résistance aux efforts de traction, tels que des fibres de verre, de carbone ou de matière organique, et de matière plastique réticulable une gorge profilée formant moule, enroulée sur la paroi d'un tambour, le profilé étant extrait de cette gorge après réticulation au moins partielle, cette réticulation pouvant résulter d'un traitement thermique.

Ceperdant, lors de la production de telles barres incurvées profilées, la longueur de barres produite par machine est rapidement plafonnée du fait que la vitesse de rotation du mandrin est limitée, cela notamment pour réduire les frais d'exploitation en employant une technique d'imprégnation classique.

De plus, la largeur des barres (dimension de la section droite selon la perpendiculaire au rayon, l'épaisseur étant définie comme la dimension de la section droite suivant la direction du rayon) qui définit en production l'avance de la barre par tour sur le mandrin (l'avance par tour étant sensiblement égale à la largeur du moule ou encore la largeur de barre additionnée de la largeur ou épaisseur, des parois radiales du moule), intervient directement sur la productivité de la machine de fabrication.

Ainsi, pour une certaine vitesse de rotation (que l'on choisira maximum), soit encore pour un certain débit de longueur de barre, plus la largeur de barre est faible, plus le débit de surface couvrante de barre est faible (produit de la largeur de barre par le débit de longueur), moins la machine produit.

Si l'on produit plusieurs barres cintrées profilées simultanément sur le même mandrin, la longueur de barre réellement obtenue est égale au cumul des longueurs de chacune des barres produites. Ainsi la production est multipliée par un facteur sensiblement égal au nombre de barres simultanément produites, étant donné que les moyens de stabilisation tels le chauffage peuvent être facilement adaptés à un tel accroissement de production sans poser notablement de problèmes liés à cet accroissement et sachant que de plus, dans le cas de barres cintrées profilées très étroites, ces moyens sont souvent en excès.

Cette production simultanée de plusieurs barres peut être notamment obtenue au moyen d'un moule-support profilé et allongé qui comporte des gorges sensiblement parallèles s'étendant suivant l'axe longitudinal de façon à permettre le moulage des barres au moins à la section des gorges, une gorge au moins pouvant être partiellement remplie.

De plus, l'utilisation d'un moule-support multigorges permet de réduire l'épaisseur du moule-support entre les gorges par rapport à la somme de deux épaisseurs de moule à une seule gorge, tel que décrit dans le brevet français FR-A-2.312.356.

De ce fait, en diminuant la largeur du moule-support, d'une part on réduit le prix du moule qui est en général exécuté dans un matériau onéreux, et d'autre part on augmente le nombre d'enroulements de barres sur le mandrin, notamment dans la zone de stabilisation.

Ainsi, à même vitesse de rotation du mandrin ou à même débit de surface couvrante, ceci permet, avec un moule multigorge un temps de stabilisation plus grand que celui de fabrication du même nombre de barres en accolant simplement plusieurs moules mono-gorge formant chacun une barre.

D'autre part, si le moule-support profilé produisant simultanément plusieurs barres cintrées est réalisé en une seule pièce, ce moule-support se comporte comme un ensemble unitaire très facilement manipulable après la stabilisation des barres.

On entend par stabilisation un processus physique ou chimique tel que fusion avec refroidissement ou réticulation qui permet à un corps, que l'on qualifiera de stabilisable, de prendre une forme stable. Les matériaux thermoplastiques, thermodurcissables ou élastomères sont, par exemple, des corps stabilisables.

L'ensemble unitaire multibarre réalisé est particulièrement intéressant au point de vue du stockage et de la manipulation puisque:

— il permet de limiter le nombre de bobines de stockage alors qu'autrement il aurait fallu autant de bobines que de barres cintrées composant cet ensemble,

— il permet aux barres cintrées de ne pas s'enchevêtrer au cours de leur manipulation, alors que cela est leur tendance naturelle, notamment dans la fabrication de tubes flexibles. Ceci est particulièrement intéressant pour la fabrication de tous les corps allongés notamment de révolution comportant de nombreuses barres de faible largeur, telles les éléments profilés allongés.

D'autre part, l'ensemble unitaire selon l'invention qui contient plusieurs barres se comporte au toronnage d'un tube flexible comme une seule et large barre, ceci permet de conserver à ce moment là tous les avantages des barres larges et notamment dans certains cas de justifier l'emploi d'un moule-support profilé comportant un grand nombre de barres étroites, i.e. plus hautes que larges.

En effet, il a été montré dans le brevet français FR-A 2.210.266 (correspondant au brevet US-A-4.013.100) l'intérêt pour la flexibilité des conduites flexibles renforcées et pour les nappes de renfort résistant aux efforts de traction, d'utiliser des barres de renfort cintrées dont le moment d'inertie de la section droite par rapport à un axe passant par son centre de gravité et perpendiculaire au rayon de courbure d'être supérieur à tous les autres moments d'inertie de la section par rapport à un autre axe passant par le centre de gravité.

Une telle exigence nécessite donc, par exemple lorsque l'on utilise des profilés de section rectangulaire, que la hauteur de la barre cintrée (dimension de la section droite selon un rayon) soit plus grande que sa largeur (dimension de la section droite selon une perpendiculaire au rayon). Cependant, comme l'épaisseur des nappes de renfort ou encore la hauteur des barres de renfort est imposée, ceci implique: une réduction de l'épaisseur des barres constitutrices de la nappe soit encore une augmentation de leur nombre.

Ainsi, un accroissement du nombre de barres ou fils se traduit, lors de la pose de barres de renfort pour la fabrication de corps comportant des armures de renfort, par un accroissement du nombre de bobines débitrices de ces barres, de matériel et de réglages.

En effet, si l'on tente de placer plusieurs fils côte à côte sur une même bobine, l'expérience montre que l'on obtient des écheveaux, en peu de temps, lorsque l'on débobine.

Il est de plus nécessaire que les barres soient formées très exactement en flexion avant pose pour accepter de se mettre en place sans se coucher.

Le procédé et le dispositif de pose de barres de renfort selon la présente invention permettent notamment de conserver les avantages des fils plus hauts que larges, tout en évitant les inconvénients de leur pose.

Le procédé et le dispositif de pose selon la présente invention permet, en particulier, l'armage de tube à partir d'une armeuse conventionnelle, sans modification coûteuse ni la nécessité de réglage de grande précision.

D'une manière générale un support profilé allongé qui maintient les barres de renfort parallèles entre elles et dans la même orientation, est alors utilisé de façon à constituer un ensemble unitaire très facilement manipulable, permettant l'embobinage des barres sur les bobines de l'armeuse, leur dévidage, et leur pose sur le corps allongé flexible avec une très grande facilité et une grande sécurité. Par orientation on entend, que tous les centres de courbure des barres cintrées situés dans n'importe quelle section droite du support soient situés du même côté du support (soit en dessus, soit en dessous).

Les barres de renfort peuvent être rassemblées par le support profilé par exemple: soit au moment de leur préformage ou juste après s'il s'agit de barres métalliques par exemple en acier, soit au moment de la fabrication des barres, par exemple, lorsque celles-ci sont réalisées en matière plastique armée de filaments à haute résistance aux efforts de traction comme il a été mentionné ci-avant.

L'ensemble unitaire ainsi composé est d'abord embobiné avant d'être placé sur l'armeuse.

Le procédé et le dispositif de pose sont particulièrement intéressants, lorsque l'on produit des barres cintrées en matière plastique armée, car il est possible d'en réaliser simultanément un certain nombre dans un moule monobloc et d'utiliser ce moule comme support des barres pour le toronnage de nappes de renfort.

Ceci évite, dans ce cas, une opération supplémentaire de pose d'un support avant toronnage et accroît les bénéfices liés à l'utilisation d'un moule ayant servi à la fabrication simultanée de plusieurs barres.

Le procédé de pose selon l'invention consiste à partir de un ou plusieurs ensemble(s) unitaire(s), placés sur une ou autant de bobines que nécessaires de l'armeuse, constitués des barres de renfort reliées par le support, de dèvider ces ensembles, de les poser comme on pose une bande ou un profilé large sur le noyau de la conduite à garnir, et de retirer le support alors que les barres ne risquent plus de s'enchevêtrer entre elles.

Pour les barres de renfort métallique, bien que cela nécessite une opération supplémentaire (le rassemblement des barres sur un support profilé comportant plusieurs gorges), il est, dans certains cas, très avantageux qu'un certain nombre de barres forment un ensemble unitaire au moment de leur pose. Ainsi, lorsqu'il y a beaucoup de barres à toronner simultanément, cela permet notamment de réduire le nombre de bobines sur l'armeuse.

Plus particulièrement dans la fabrication et l'utilisation de barres en matière plastique armée, mais sans que l'usage de ce type de support soit limitatif, le support peut être profilé et allongé et comporter des gorges sensiblement parallèles s'étendant suivant l'axe longitudinal de façon à permettre le moulage des barres au moins à la section des gorges. Une gorge au moins pouvant être que partiellement remplie. Le support pourra notamment être le moule-support décrit ci-avant et servant à la production de barres.

De la même manière que l'ensemble unitaire multibarre est utilisé pour poser des nappes de renfort au moyen d'une armeuse avec récupération du moule-support multigorge, on pourra utiliser directement, dans la fabrication de tubes flexibles ou d'éléments comportant des barres de renfort notamment en matériaux composites armés, des élément unitaires tels le moule-support profilé mentionné ci-avant, contenant des barres cintrées sous forme d'un profilé.

La présente invention propose aussi un corps allongé comportant au moins un élément profilé allongé cintré renforcé de plusieurs barres cintrées armées. Cet élément profilé multibarres est utilisé dans une nappe de renfort et a un comportement mécanique au moins aussi bon que celui de l'ensemble des barres qui les composent et qui seraient utilisées dans la constitution d'une nappe de renfort d'un corps armé. Cet élément profilé apporte en outre un certain nombre d'avantages comparé à l'ensemble des barres prises indépendamment les unes des autres.

Parmi ces avantages on peut citer: la facilité de fabrication, de manipulation pour la confection des armures de renfort, la cadence plus élevée de production, tous ces points se traduisant par des avantages financiers, auxquels il faut ajouter la possibilité d'obtenir des profilés antiusure utilisant moins de matériau antiabrasion et des profilés pour nappe étanche moins coûteux que les profilés selon l'art antérieur.

Plus précisément, le profilé est, par exemple, composé d'une pièce-support profilée allongée de section constante ou non constante comportant plusieurs gorges séparées par des parois et qui a en section la forme d'un peigne, et de plusieurs barres cintrées placées à l'intérieur desdites gorges.

Les barres cintrées peuvent être réalisées par exemple dans un matériau stabilisable et comporter des filaments de renfort résistant aux efforts de traction.

Le profilé trouve une application privilégiée lorsqu'il est utilisé dans la fabrication des corps comportant des armatures de renforcement tels des conduites étanches, des câbles, des corps de révolution.

Pour la compréhension de l'invention, mais sans que l'exemple cité soit limitatif, on se référera à une conduite flexible comportant des armatures de résistance à la pression et/ou à la traction et servant au transport d'un fluide (par exemple un hydrocarbure). Ces conduites sont en effet soumises à des efforts de traction importants, soit lors de leur mise en place (notamment lorsqu'elles sont déposées au fond de la mer), soit lors de leur utilisation.

Les conduits utilisables pour cette technique comprennent une âme tubulaire souple et étanche pouvant être constituée en élastomère ou matière plastique, au moins une armature résistante à la pression et au moins une armature de résistance aux efforts de traction et/ou de torsion appliqués à la conduite, ces conduites comportant, en outre, une ou plusieurs gaines d'étanchéité.

Les armatures sont constituées par des enroulements hélicoïdaux, ou par des anneaux, de fils, torons, barres ou profilés métalliques ou en matière réticulable armée comme décrit dans les brevets français FR-A-2.312.356 et FR-A-2.283.768 (correspondant au brevet US-A-3.966.388).

Dans cette ou ces nappes de renforts qui composent les conduites flexibles les barres de renfort sont dotées entre elles d'une certaine mobilité. La présente invention permet de conserver l'avantage lié à cette mobilité relative des barres mais d'en éliminer les inconvénients.

En effet, si les barres sont mobiles entre-elles dans la pièce-support et si cette pièce est adaptée pour être élastique, les barres ne seront pas couplées mécaniquement entre-elles et auront en traction, en torsion et en flexion un comportement similaire à celui des barres en l'absence de pièce-support.

Ceci impose, si les barres sont adhérentes à la pièce-support, que celle-ci soit très déformable, et, si les barres sont libres de coulisser dans les gorges de la pièce-support, une moindre déformation maximale de la pièce-support.

Cette dernière disposition est préférable puisque la pièce-support est moins sollicitée mécaniquement, on pourra cependant, comme il est décrit plus loin, solidariser à la pièce-support une ou plusieurs barres ou parties de face de barres pour répartir les usures au niveau des surfaces en mouvement.

Selon son mode de réalisation préféré, le profilé offre notamment l'avantage de pouvoir être facilement produit lorsque l'on utilise la pièce-support pour produire plusieurs barres de renfort. Cette possibilité de double usage n'est permise que si la pièce-support est adaptée à la fois aux exigences des nappes de renfort du corps allongé armé et aux exigences de fabrication de barres cintrées renforcées en matériau composite.

D'une maniére générale englobant notamment l'utilisation de la pièce-support comme moule pour la fabrication de barres, la pièce-support sera donc appelée moule-support.

L'utilisation de pièce-support comme moule et support, évite l'opération de démoulage et les opérations de nettoyage (élimination des encrassements notamment lors de l'utilisation de fibre de verre) si l'on désire un recyclage du moule-support, facilite la manipulation des barres-profilées du fait qu'elles sont rassemblées dans un ensemble unitaire d'autant plus appréciable que les barres qui le composent sont étroites donc plus nombreuses, facilite le toronnage cela d'autant plus que le nombre de profilés à poser simultanément diminue, et correctement utilisé, n'entrave pas les caractéristiques mécaniques des corps allongés armés qui les comprennent.

Il a été montré dans le brevet français FR2.210.266 l'intérêt, pour la stabilité des nappes de composer des nappes de renfort de traction de tubes flexibles en utilisant des barres profilées, dont le moment d'inertie d'une section droite par rapport à un axe transversal passant par le centre de gravité de la section a une valeur supérieure à celles des moments d'inertie mesurés par rapport aux autres axes passant par le centre de gravité, c'est-à-dire disposés sur une conduite de telle sorte que son rayon passe par le centre de gravité et soit perpendiculaire audit axe transversal.

Cependant la fabrication et la production de telles conduites sont généralement très difficiles du fait du grand nombre de barres profilées mis en oeuvre, cela notamment lorsqu'il s'agit de barres profilées de renfort de section rectangulaire dont la largeur est faible et la hauteur grande.

La présente invention remédie entre autre à cet inconvénient en proposant un ensemble unitaire ou profilé multibarre qui se pose facilement (nombre réduit, forme plus plate), qui se comporte dans les corps allongés armés comme un ensemble de barres indépendantes et qui permet de faire en outre des économies de matériau antiabrasion.

Ceci peut être réalisé en employant un moule-support antiabrasion qui éviterait l'usure des barres. Une telle protection antiabrasion a fait l'objet, dans le cas de la protection d'une barre, du brevet français FR 2.494.401 (correspondant au brevet GB-A-2.088.320). Selon ce brevet la gorge-moule sert de garniture antiabrasion. Un moule-support selon l'invention réalisé en matériau antiabrasion permet de réduire le volume de matériau qui est coûteux, car l'épaisseur des parois internes de la pièce-support est inférieure à la somme des épaisseurs des parois adjacentes des protections antiabrasives de deux barres selon le brevet FR 2.494.401.

Ce gain de matière étant d'autant plus sensible que le nombre de barres dans une pièce-support est élevé.

Il est aussi possible d'adjoindre au profilé un élément formant couvercle de façon à prémunir les barres d'une usure sur leur partie extérieure (face ouverte du moule-support).

Lorsque l'on utilise un profilé multibarre, et plus encore lorsqu'il est antiabrasion, il est intéressant de répartir au mieux les usures du moule-support et des barres. A cet effet, on pourra rendre solidaire une ou plusieurs parties d'une ou plusieurs barres du moule-support par tout moyen adapté.

Cette partie pourra être une surface verticale ou horizontale intérieure au moule-support ou être une zone étroite de cette surface qui s'étendrait longitudinalement. Une surface verticale étant une surface parallèle aux rayons des cercles osculateurs du profilé, une surface horizontale étant une surface qui en chaque point est perpendiculaire au rayon osculateur passant par ce point.

On peut par exemple réaliser cela en rendant solidaire du moule-support tout une barre voisine du centre du moule-support, ou une seule surface verticale voisine du centre du moule-support, ou plusieurs surfaces verticales n'appartenant pas à la même cloison interne du moule-support, ou la zone centrale du fond d'une ou plusieurs gorges du moule-support. Cette ou ces surface(s) d'immobilisation s'étendant longitudinalement suivant le moule-support, de façon continue ou discontinue.

Le profilé permet de réaliser des nappes étanches. Pour cela, il suffit que les bords du moule-support soient pourvus d'évidements qui définiraient lors de la juxtaposition de deux profilés de ce type (ou de deux spires consécutives d'un même profilé) un espace confiné que l'on pourra garnir d'un matériau élastique réalisant l'étanchéité, adhérant aux parois de cet espace confiné et permettant de grandes déformations. Les profilés réalisant des nappes étanches ont déjà été décrits dans le brevet français FR 2.210.267 (équivalent au brevet US-A-3.858.616).

Le profilé permet de plus, vu sa largeur, de réduire la taille des espaces confinés.

Le profilé apporte une stabilité des nappes de renfort de conduites flexibles soumises essentiellement à de la flexion.

En effet, bien que ce phénomène soit surtout sensible avec l'emploi de barres plates, les efforts exercés sur le flexible peuvent produire des migrations de barres non maintenues dans une nappe de renfort et engendrer des désorganisations préjudiciables pouvant conduire à l'éventration de la conduite.

Le profilé proposé s'oppose à ce mouvement grâce aux gorges du moule-support qui constituent des obstacles aux déplacements des barres et ainsi assure une bien meilleure stabilité de la nappe.

Comme les barres auto-agrafables mentionnées dans le brevet français FR 2.210.267, les profilés multibarres selon l'invention peuvent comporter des formes latérales qui permettent l'auto-agrafage du (de) profilé(s) lorsque deux spires sont adjacentes.

Cette possibilité est entre autre appréciable pour la stabilité de nappe de renfort, la formation de nappe étanche telles par exemple des nappes résistant à la pression (étanchéité pouvant être facilement réalisée entre les formes latérales complémentaires par exemple par collage ou garnissage d'un matériau adhérant), la fabrication de conduite ne comportant qu'une seule nappe de profilé.

Lors de la réalisation corps creux renforcés, le profilé pourra aussi bien avoir la base du moule-support dirigée vers l'intérieur du corps que vers l'extérieur du corps creux.

Au cours de la manipulation du profilé multibarres, il peut être souhaitable que les barres soient bien retenues dans les gorges du moule-support. On pourra à cette fin les immobiliser provisoirement, par exemple par collage en dosant l'adhérence pour qu'à partir d'un certain seuil de contrainte les barres soient désolidarisées du moule-support.

Pour faciliter le déplacement relatif des barres entre elles, on pourra utiliser des matériaux lubrifiants dont l'efficacité sera immédiate ou ne pourra se manifester que pendant le service du corps renforcé.

L'invention fournit un procédé de fabrication en continu de barres de renfort incurvées profilées à section constante ou non constante en matière stabilisable armée produites à l'intérieur d'un moule-support profilé que l'on enroule autour d'un mandrin et dans lequel on dispose des éléments de renforcement imprégnés de résine stabilisable, avant de procéder à la stabilisation de ladite résine sur au moins une partie de la longueur dudit mandrin, ce procédé étant notamment caractérisé en ce que ledit moule-support comporte plusieurs gorges dans lesquelles on dispose lesdits éléments de renforcement imprégnés de résine stabilisable produisant ainsi plusieurs barres incurvées à section profilée en matière stabilisable armée simultanément sur le même mandrin.

On pourra utiliser des moyens permettant aux barres, une fois produites et encore placées dans le moule-support, d'avoir un déplacement relatif entre-elles.

On pourra utiliser un moule-support réalisé en une seule pièce pour produire les barres.

On pourra dégager les barres du moule-support profilé après leur stabilisation et le moule-support pourra être adapté au dégagement desdites barres profilées.

On pourra procéder au recyclage en continu du moule-support profilé une fois dégagé des barres.

On pourra faire adhérer la matière stabilisable composant les barres à la paroi interne d'au moins une gorge du moule-support.

La matière stabilisable pourra être formulée pour ne pas adhérer à certaines des parois internes des gorges du moule-support.

On pourra utiliser un moule-support profilé dont la paroi externe est réalisée en matériaux résistants à l'abrasion.

On pourra utiliser un moule-support constitué de deux pièces superposées et l'on pourra séparer une pièce de l'autre après avoir réalisé la stabilisation au moins partielle de la résine des barres incurvées.

On pourra, après avoir garni lesdites gorges du moule-support profilé, recouvrir celui-ci d'au moins un élément formant couvercle, préalablement à la stabilisation et séparer du mandrin sous forme d'ensemble unitaire l'ensemble du profilé, son garnissage et l'élément formant couvercle.

L'élément formant couvercle pourra avoir une section adaptée pour permettre son emboîtement sur le moule-support profilé.

L'invention fournit également un moule-support profilé pour fabriquer en continu des barres incurvées à section profilée en matière stabilisée armée produites à l'intérieur de ce moule-support dans lequel on dispose des éléments de renforcement imprégnés de résine stabilisable, le moule-support étant enroulé autour d'un mandrin et la stabilisation de la résine étant réalisée sur au moins une partie de la longueur dudit mandrin. Ce moule-support est notamment caractérisé en ce qu'il est composé de plusieurs gorges sensiblement parallèles, ayant des sections respectives correspondant à celles des différentes barres profilées à obtenir simultanément.

Le moule-support profilé pourra comporter au moins une gorge plus haute que large.

Le moule-support pourra comporter des bords adaptés pour que deux spires adjacentes entourées hélicoïdalement, soient agrafables l'une à l'autre.

L'invention fournit aussi un procédé de pose en continu des armatures de renforcement de corps allongés flexibles, les armatures étant constituées de plusieurs barres de renfort cintrées. Le procédé selon l'invention est caractérisé en ce qu'on alimente la machine de pose avec au moins un ensemble unitaire composé de plusieurs barres groupées sur un support et en ce qu'on procède à l'enlèvement du support au cours de la pose des barres pour la formation de l'armure.

On pourra tendre les barres avant et au cours de leur pose.

On pourra effectuer la séparation des barres du support dans une zone où les barres, sorties du support ou présentes dans le support, sont tendues.

On pourra enlever les barres du support avant que celles-ci constituent l'armature de renforcement.

On pourra, avant d'alimenter la machine de pose avec l'ensemble unitaire, grouper les barres composant l'ensemble sur un support.

On pourra grouper les barres composant l'ensemble unitaire, une fois qu'elles auront été cintrées.

L'invention fournit encore un dispositif pour poser en continu les armatures de renforcement de corps allongés flexibles à l'aide d'au moins un ensemble unitaire composé de plusieurs barres de renfort regroupées par un support. Ce dispositif se caractérise en ce qu'il comporte des moyens permettant de séparer les barres de renfort du support.

Bien entendu cette opération est effectuée à un moment où les risques d'enchevêtrement des barres entre elles sont écartés. Ceci se produit notamment une fois que les barres sont posées sur le corps allongé, ou que les barres sont mises en tension avant leur pose sur le corps allongé ou qu'elles sont suffisamment proches du corps allongé pour ne plus pouvoir s'enchevêtrer entre elles.

Le dispositif pourra comporter des moyens pour stocker le support une fois qu'il a été utilisé pour la pose.

Le dispositif pourra comporter des moyens de stockage et d'alimentation de l'ensemble unitaire pour la pose de ses barres.

Le dispositif pourra comporter des moyens de tension des barres au cours de leur pose.

Les moyens de tension pourront agir au niveau des moyens de stockage et d'alimentation de l'ensemble unitaire.

Le dispositif pourra comporter une grille d'agencement des barres pour la constitution de l'armature.

L'invention fournit en outre un support pour grouper des barres et les maintenir dans une certaine direction. Ce support est caractérisé en ce qu'il est composé de plusieurs éléments disjoints.

L'invention fournit de plus un corps allongé flexible comportant au moins un élément profilé allongé cintré armé, et est notamment caractérisé en ce que ledit élément comporte une pièce-support comprenant plusieurs gorges sensiblement parallèles entre elles s'étendant dans le sens longitudinal de l'élément profilé. Au moins deux des gorges comportent chacune une barre de renfort comprenant elle-même des filaments noyés dans une matière stabilisée, ladite pièce-support étant enroulée en hélice.

Les barres pourront se déplacer relativement entre-elles lors d'une utilisation du corps allongé flexible.

L'élément profilé pourra comporter au moins une gorges plus haute que large.

La base de la pièce-support pourra être dirigée vers l'intérieur du corps allongé.

L'élément profilé pourra comporter des moyens de glissement d'au moins une des barres dans la gorge.

L'élément profilé pourra avoir une section adaptée pour que deux spires adjacentes d'au moins un de ces éléments profilés entouré hélicoïdalement délimitent entre elles un espace confiné pouvant être rempli par un matériau élastique adhérent.

Un élément formant couvercle pourra recouvrir la pièce-support garnie des barres et former un ensemble unitaire avec l'élément profilé.

L'élément profilé éventuellement recouvert pourra être constitué de pièces réalisées en matière plastique.

L'élément profilé éventuellement recouvert pourra être constitué de pièces réalisées en matériau résistant à l'abrasion.

L'épaisseur des parois internes de la pièce-support pourra être au plus égale à l'épaisseur des parois externes de la pièce-support.

L'invention fournit également un profilé multibarre comportant une pièce-support comprenant plusieurs gorges sensiblement parallèles entre-elles s'étendant dans le sens longitudinal, au moins deux des gorges comportant chacune une barre de renfort.

Ce profilé est notamment caractérisé en ce que les barres sont adaptées à se déplacer relativement entre elles lors d'une utilisation dudit élément profilé.

Au moins une barre pourra être solidarisée de la pièce-support selon une ou plusieurs zones d'une surface verticale ou horizontale d'une gorge de la pièce-support, cette ou ces zones s'étendant longitudinalement dans la pièce-support de façon continue ou discontinue.

Le moule-support pourra être adapté à servir de support pour la mise en oeuvre du procédé de pose avec récupération du moule-support ou à servir de pièce-support pour le groupement de barres dans la constitution des corps allongés flexibles.

L'invention est illustrée par les figures annexées parmi lesquelles:

— la figure 1 schématise le procédé de fabrication selon l'invention de barres profilées,

— la figure 2 schématise le procédé de fabrication selon l'invention d'un ensemble unitaire,

— la figure 3 est une vue de détail, en section droite, d'un moule-support profilé multigorges selon l'invention,

— la figure 4 est une vue, en section droite, d'un moule-support profilé autoagrafable muni d'un élément formant couvercle,

— la figure 5 montre une section d'un moule-support profilé comportant des barres de renfort et recouvert d'un couvercle emboîtable,

— la figure 6 est une vue en section d'un moule-support profilé multigorges renforcé par une pièce inférieure séparable,

— la figure 7 représente en section un mode de réalisation de moule-support profilé à évidement latéraux,

— la figure 8 est une vue en section d'un moule profilé double,

— la figure 9 montre en section un moule profilé garni d'une feuille ayant subi un traitement d'adhérence,

— la figure 10 schématise, vu suivant l'axe du corps allongé flexible (profil), un procédé de pose, selon l'invention, de barres pour la fabrication de nappes de renfort,

— la figure 11 schématise, vu de face, un procédé de pose selon l'invention, illustré par la figure 10,

— la figure 12 représente une conduite flexible selon l'art antérieur, pourvue d'une armature de résistance à la traction,

— la figure 13 représente schématiquement, vue en perspective, la déformation théorique de l'une des barres profilées de l'armature de résistance à la traction selon la figure 12,

— la figure 13A est une coupe schématique suivant la ligne IV-IV de la figure 13 sur laquelle toutes les barres profilées de l'une des nappes de l'armature de traction ont été représentées.

— la figure 14 représente en section une nappe de l'armature de résistance à la traction d'une conduite flexible composée de profilés multibarre selon l'invention.

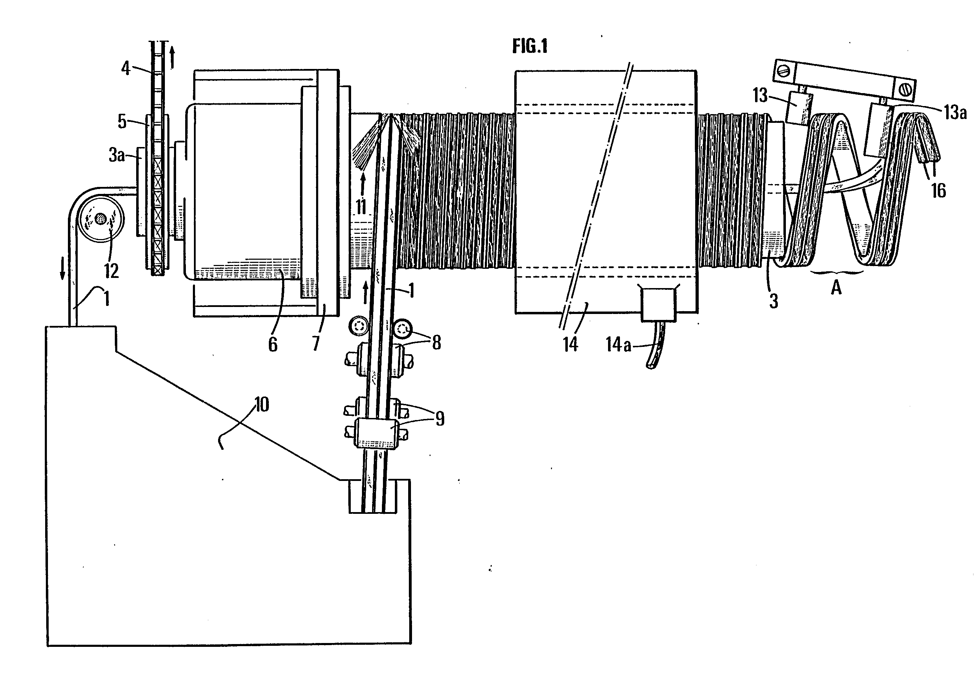

La figure 1 schématise le procédé de fabrication selon l'invention de barres profilées 16 en matière plastique stabilisable au moyen d'un moule-support 1 avec recyclage du moule-support profilé.

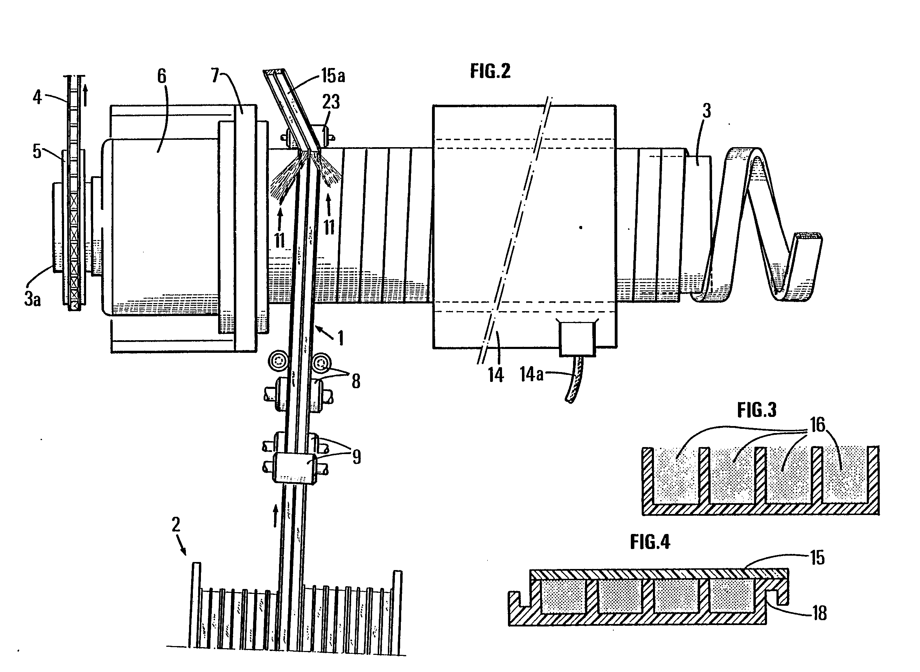

La figure 2 illustre schématiquement une variante du procédé de fabrication selon l'invention dans lequel le moule-support 1 n'est pas séparé des barres 16 sitôt celles-ci fabriquées et dans lequel on peut poser sur le moule-support un élément 15 formant couvercle.

Sur les figures 1 et 2, la référence 1 désigne un moule-support profilé évidé qui est bobiné sur un tambour ou mandrin 3.

Dans le mode de réalisation préféré, la plus grande face du moule-support repose sur le mandrin, mais on peut facilement concevoir que ce soit les sommets des cloisonnements qui s'appuient contre le mandrin. L'arbre 3a du tambour 3 est relié à des moyens d'entraînement en rotation de ce tambour, qui comportent par exemple une chaîne 4 engrenant sur un pignon denté 5 calé sur l'arbre 3a. L'arbre 3a repose sur le palier 6 par l'intermédiaire de roulements, ce palier étant solidaire d'un châssis 7.

Avant d'être bobiné sur le mandrin 3, le moule profilé passe entre les galets de guidage 8 et de tension 9.

L'élément 1 présente plusieurs gorges longitudinales (Fig. 3) qui, au fur et à mesure de l'enroulement sur le tambour 3 sont remplies de filaments 11 à haute résistance, ou rovings, préalablement imprégnés d'une matière plastique stabilisable capable ou non d'adhérer aux parois internes des gorges selon leur position dans le moule et selon le but recherché, et capable d'adhérer auxdits filaments. Ce mélange de filaments et de matière stabilisable forment les noyaux 16 du profilé qui deviendront, après stabilisation, les barres cintrées armées.

Le moule profilé 1 ainsi garni passe ensuite dans un four 14 où il est soumis à un traitement thermique capable de stabiliser la matière plastique armée qu'il renferme.

Le four 14 est alimenté en énergie par tout moyen approprié, tel que par exemple, le câble 14a, si l'on utilise des moyens de chauffage électriques.

Sur la figure 1, après stabilisation au moins partielle de la matière stabilisable que comprend les barres 16, on extrait du moule profilé 1 les barres incurvées profilées 16 qui sont formées par moulage. On réalise par exemple cette extraction en un point situé à la sortie du mandrin, en courbant le moule 1 grâce aux galets 13 et 13a, vers l'axe du mandrin et en le faisant passer dans le mandrin puis dans l'arbre 3a vers la gauche de la figure et qui auront été tous deux alésés.

Il est également possible de sortir directement le moule gorge entre des groupes de barres formées par exemple, dans l'espace A représenté à la figure 1.

Les barres incurvées armées 16 extraites du moule 1 sont dirigées vers un lieu de stockage (tel une bobine) ou d'utilisation, quand au moule 1 qui passe sur le galet 12 à sa sortie de l'arbre d'entraînement 3a, il peut être soit stocké, soit réutilisé en continu, après passage dans un dispositif 10 de nettoyage du moule 1 par un moyen convenable.

Les barres obtenues peuvent être utilisées pour réaliser des conduites légères résistantes.

A titre d'exemple non limitatif, on a réalisé un moule creux ayant trois gorges 17 formant trois moules identiques de section rectangulaire 5mm X 7mm et une épaisseur des parois externes et des cloisons internes de 1mm. Ce moule-support étant fabriqué en polyamide 11 (généralement désigné par la marque de fabrique Rilsan) par un procédé d'extrusion classique.

On a garni cette gorge d'un mélange de 70 parties en poids de mèches continues de fibres de verre unidirectionnelles non tordues et de 30 parties en poids d'un mélange de résine èpoxyde du type diglycidyléther de bisphénol A (100 parties) et de 4,4 diaminodiphényl méthane (27 parties en poids).

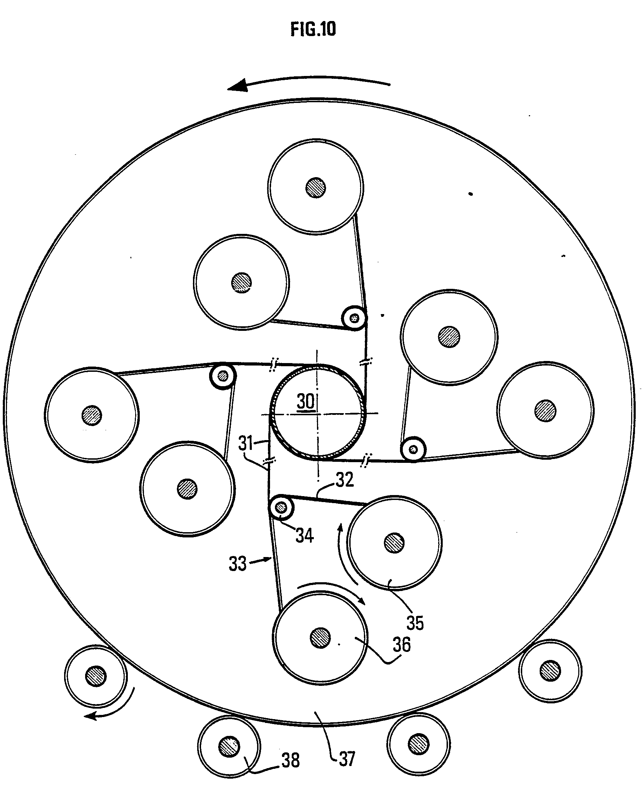

Pour faciliter la séparation du moule et des barres cintrées produites, on pourra utiliser des produits anti-adhérents, tel qu'un agent de démoulage d'un type courant dans l'industrie des matières plastiques, avant de garnir ces gorges de filaments et de matière plastiques stabilisables, ou tel encore une ou plusieurs feuille(s) 22 qui n'adhère(nt) pas au moule-support, mais adhère(nt) au noyau et qui épouse(nt) les formes intérieures du moule-support (Fig. 9).

Sur la figure 2, la référence 2 désigne une bobine de stockage du moule profilé, qui, passant entre les galets de guidage 8 et de tension 9, va être rempli desdits filaments.

Avant l'entrée dans le four 14, le moule peut être éventuellement recouvert d'un élément 15, 15a formant couvercle.

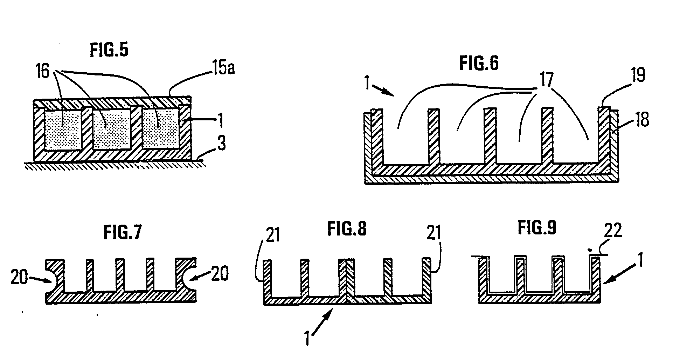

Cet élément pourra être constitué d'un ruban 15 en matière plastique (Fig. 4), ou bien comme présenté sur les figures 2 et 5, d'un élément profilé 15a dont la section est adaptée à permettre son emboîtement sur le moule-support 1 avant le traitement thermique dans le four 14.

Un galet 23 presse l'élément 15a sur le moule profilé 1 pour assurer cet emboîtement. Une légère traction sur l'élément 15a peut également assurer cet emboîtement par effet cabestan.

Une solidarisation du couvercle avec le moule-support et/ou avec les barres de renfort peut être effectuée par exemple par emboîtement forcé, ancrage mécanique, collage ... Le four 14 peut, si besoin est, être utilisé pour réaliser cette solidarisation.

Pour certaines applications, notamment la fabrication de tubes ayant une grande flexibilité, on pourra, sans effectuer de démoulage, empêcher l'adhérence entre certains noyaux 16 en matière plastique armée et l'une au moins des parois de la gorge dans lequel ils sont, de manière que ces noyaux puissent avoir un déplacement longitudinal relatif par rapport au moule profilé 1, au lieu de former avec lui un ensemble monobloc de moindre flexibilité.

On pourra, à cet effet, garnir certaines parois des gorges, ou certaines gorges, d'un produit anti-adhérent, tel que ceux décrits ci-avant.

Inversement, pour les barres que l'on voulait rendre solidaire du moule-support ou d'une partie du moule-support, on pourra utiliser une colle adaptée, par exemple la colle époxyde SCOTCH-WELD 2216 B/A qui est une marque déposée par la Société Minnesota Mining et Manufacturing Co, dans les proportions conseillées par le fabricant.

Pour produire le même effet, on pourra aussi créer sur les parois des gorges des formes adaptées à permettre un ancrage mécanique et à empêcher tout mouvement relatif des noyaux ou barres cintrés considérés.

Dans certains cas d'utilisation des barres cintrées profilées, on pourra avoir recours à un dosage des moyens d'adhérence, de telle manière qu'à partir d'un seuil de contrainte choisi, les noyaux n'adhèrent plus au moule et/ou au couvercle.

Lorsque l'on ajoute au moule un couvercle emboîtable, celui-ci pourra, selon son utilisation finale, adhérer à la face supérieure de certaines ou de toutes les barres et/ou encore adhérer au sommet de certaines cloisons intérieures ou extérieures du moule.

On pourra faire adhérer les barres au couvercle et on pourra dégager le moule-support des barres liées entre elles par le couvercle et conduire cet ensemble vers un lieu de stockage et d'utilisation alors que l'on pourra recycler le moule.

Toujours, dans le cas où l'on souhaiterait que les barres cintrées soient employées avec le moule profilé ayant servi à leur fabrication, celui-ci peut paraître surdimensionné pour l'application visée.

La figure 6 montre un exemple de résolution de ce problème, en proposant que le moule soit constitué d'une pièce supérieure 19 dimensionnée en vue de l'application finale et d'une pièce inférieure 18 servant de renfort lors de la fabrication des noyaux contenus dans la pièce supérieure 19, le tout faisant office de nouveau moule.

Une fois les barres cintrées réalisées, alors que l'on ne craint plus de déformation du moule, le renfort 18 peut être séparé de la pièce supérieure.

Si le moule profilé contenant les barres cintrées profilées est utilisé tel quel (Fig. 3) ou éventuellement sans son support comme dans la description illustrée par la figure 6, il est intéressant que cet ensemble unitaire puisse avoir extérieurement des formes compatibles avec sa future utilisation.

La figure 7 présente un exemple de moule-support profilé comportant des évidements latéraux 20 qui pourraient, lors de la constitution d'une nappe avec ces moules profilés juxtaposés dans la fabrication de tubes armés, définir avec une spire adjacente un espace confiné que l'on remplirait de matériau déformable permettant d'assurer l'étanchéité. De tels profilés sont décrits dans le brevet français FR-2.229.913 (équivalent au brevet US-A-4.013.100).

La figure 4 représente un autre exemple de moule-support ayant une section permettant, soit l'autoagrafage de ce corps, par exemple pour former des tubes par enroulement hélicoïdal du profilé avec des spires adjacentes, soit l'agrafage des parties complémentaires de deux profilés adjacents aux formes adjacentes adaptées à l'agrafage.

Il a été suggéré, notamment dans la description de la figure 2, de procéder à un démoulage soit directement sur la machine de production des barres cintrées, soit ultérieurement.

Cependant, bien que l'ajout d'additifs de démoulage facilite l'opération de démoulage, les efforts produits sur le moule pour réaliser cette opération peuvent induire dans certains cas, tels par exemple le démoulage d'un très grand nombre de barres cintrées, ou de barres cintrées de formes moins démoulables, des déformations permanentes du moule qui après plusieurs recyclages conduiraient à son rejet.

Il n'est pas possible d'augmenter les épaisseurs des parois extérieures et des cloisons intérieures du moule pour obvier à cet inconvénient, car l'augmentation de l'épaisseur des parois conduit, pour une déformation interne donnée, à une augmentation de la déformation externe, donc à un dépassement plus rapide de la limite élastique du matériau constituant la gorge-moule.

Pour conserver les avantages de la réalisation simultanée de plusieurs barres cintrées, il a été imaginé de limiter le nombre de barres cintrées profilées démoulables en une seule opération.

La figure 8 propose un moule comportant deux parties adjacentes 21 rassemblées par un moyen adapté aux moments de la fabrication des barres profilées et séparées par la suite éventuellement au moment du démoulage et qui permettrait de réduire les déformations permanentes réduisant le nombre de recyclage du moule.

Suivant que l'on voudra conserver ou non les barres profilées dans le moule lors de l'utilisation finale, les sections des gorges qui pourront être variées, seront soit adaptées à faciliter le démoulage en utilisant par exemple une légère dépouille, soit au contraire à l'empêcher en ayant recours par exemple aux aspérités de forme.

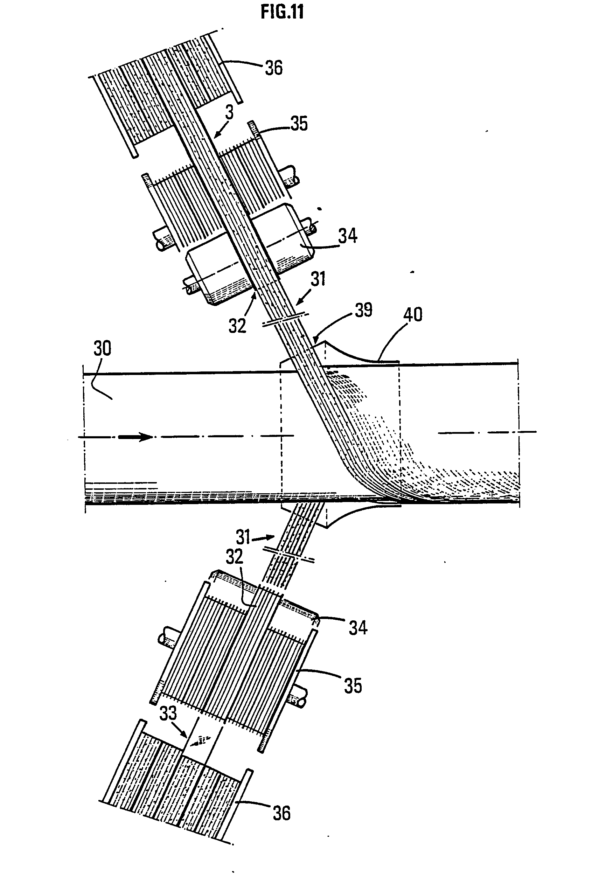

La figure 10 qui est une vue suivant l'axe du corps allongé en cours de toronnage, schématise un procédé de pose, selon l'invention, de barres pour la fabrication de nappes de renfort d'un corps allongé avec récupération du support avant que les barres atteignent le noyau 30 du corps allongé.

Le support comporte au moins autant de gorges s'étendant longitudinalement qu'il contient de barres. Les barres sont placées à l'intérieur des gorges. Les sections des gorges sont adaptées à celles des barres de manière à limiter les mouvements des barres.

Les barres sont orientées comme elles seront disposées sur ledit corps. Si ces barres sont cintrées, les centres de leur rayon osculateur se trouvent tous du même côté du support.

Jusqu'au moment où l'on voudra les en séparer, les barres peuvent être maintenues dans leur support soit par solidarisation temporaire, par exemple au moyen d'un collage ou d'obstacle(s) ou d'un coincement, dont l'effet disparaît au-delà d'un certain seuil de contrainte, soit naturellement pour celles qui sont cintrées et qui sont dans un support où une ou plusieurs autres barres sont solidarisées. La désolidarisation du support des barres qui en sont ou non solidaires s'effectue, par exemple, par voie mécanique avec une traction et/ou une torsion.

En effet, il apparaît que lorsque les barres cintrées en matière plastique stabilisable armée sont produites à l'intérieur d'un support-moule (fig. 2), il peut suffir qu'une barre, telle la barre centrale du support, ou plusieurs barres, telles les barres extrêmes du support soi(en)t solidarisée(s) du support pour que les autres barres s'y maintiennent naturellement. Le support, se déformant comme la ou les barres solidarisées, suit le mouvement des autres barres et les maintien-(nen)t dans leur gorge respective en dépit des efforts exercés lors du toronnage, en effet les différentes barres étant supposées avoir un comportement mécanique similaire.

Les gorges du support peuvent comporter des aspérités de formes empêchant les barres d'en sortir, telles un étranglement de la gorge à son niveau supérieur ou ouverture. Le support étant élastique, un cintrage d'axe longitudinal produit l'ouverture des gorges et permet aux barres placées d'en sortir au moment choisi.

Selon le mode préféré de réalisation les barres cintrées en matière plastique armée sont produites à l'intérieur d'un moule-support, comme précédemment décrit, et joue à la fois le rôle de moule pour la fabrication des barres et de support pour le toronnage de corps allongés. Ce moule-support pourra être composé de polyamide 11 (généralement désigné par la marque de fabrication Rilsan) qui a l'avantage de convenir au moulage et à la pose des barres profilées, de subir le démoulage de plusieurs profilés à la fois et de pouvoir être éventuellement réutilisé.

Les barres, immobilisées dans le moule-support mais non solidaires de celui-ci, pourront être recouvertes d'un produit anti-adhérent, tel qu'un agent de démoulage de type courant dans l'industrie des matières plastiques, afin de faciliter la libération des barres au moment désiré.

L'armature du corps allongé est posée dans le cas de la figure 10 à l'aide de quatre groupes de barres 31 issues de quatre ensembles unitaires 33. On peut facilement envisager un plus grand ou un plus petit nombre de groupes de barres ou d'ensembles unitaires. Ce nombre dépend du nombre de barres par groupe et du nombre de barres constituant l'armature.

L'ensemble unitaire 33, composé du groupe de barres 31 et du support 32 qui les maintient orientés, est stocké sur la bobine débitrice 36. L'ensemble unitaire 33 passe sur un galet d'orientation 34 qui permet d'une part de conserver un angle de pose des barres sensiblement constant et d'autre part de libérer les barres de leur support 32.

La bobine 36 est freinée en rotation par un moyen adapté tel un frein à sangle ou à courroie de façon à maintenir une tension sur l'ensemble unitaire et les barres. Cette tension a notamment pour but d'empêcher les barres de former des écheveaux et éventuellement d'opposer une résistance aux efforts lors de l'enlèvement du moule-support. Ces moyens de freinage pourront être asservis à la tension exercée sur les barres et/ou sur l'ensemble unitaire.

On pourra sans inconvénient réaliser autrement la tension sur l'ensemble unitaire et/ou sur les barres, par exemple, à l'aide de deux rouleaux ralentisseurs.

Alors que le groupe de barres 31 est soutenu par le galet 34, le moule-support 32 contourne un secteur du galet 34 afin de libérer les barres avec un effort minimum et d'éviter toutes déformations de celles-ci. La libération des barres s'effectue par les ouvertures des gorges du moule-support. Ces ouvertures étant dirigées vers l'espace délimité par les barres et ne contenant pas les centres des cercles osculateurs des barres cintrées.

Le moule-support 32 une fois séparé du groupe de barres 31 est enroulé sur la bobine 35 et pourra sans inconvénients être récupéré, éventuellement après un nettoyage, pour la fabrication d'un nouvel ensemble unitaire.

Toutes les barres tendues et orientées, nécessaires à la constitution de la nappe de renfort, après avoir été extraites par groupes 31 de chacun des supports 32, sont acheminées vers le noyau 30 où elles sont posées par groupes de façon à réaliser l'armature, grâce à la rotation relative des barres autour du noyau.

Sur la figure le noyau est fixe et les quatre ensembles d'alimentation en barres 31, 32, 33, 34, 35, 36 sont placés dans une cage support 37 qui est soutenue par les galets 38 tournant autour du noyau 30. On aurait très bien pu concevoir une cage 37 immobile et un noyau tournant. Le mouvement de la cage par rapport au noyau étant un vissage droit ou gauche suivant le sens du pas d'enroulement.

Les barres peuvent éventuellement être resserrées entre-elles soit lorsqu'elles constituent les groupes 31, soit une fois sur le mandrin, comme par exemple avec la filière 40 montrée sur la figure 11.

La figure 11 schématise, vu de face, le même procédé de pose selon l'invention que celui illustré en vue de profil par la figure 10.

Pour permettre le toronnage du noyau 30 par les barres disposées en quatre groupes, le noyau est animé d'une translation axiale permettant la pose des barres sur toute sa longueur.

La grille séparatrice 39, placée juste avant que les barres atteignent le noyau 30, assure le bon positionnement des barres entre elles et ainsi leur bon agencement dans l'armature de renfort.

Les ouvertures des gorges du support peuvent aussi être dirigées vers les centres de courbures des barres. De ce fait, le galet 32 qui sur la figure 10 est intérieur aux barres (l'intérieur étant l'espace délimité par les barres et contenant les centres de courbures des barres cintrées) devra être extérieur aux barres (l'extérieur étant l'espace délimité par les barres et ne contenant pas les centres de courbures des barres cintrées) et de la même manière le moule-support 32 contournera un secteur du galet 34 pour permettre la libération des barres qui sont contenues dans le support.

La figure 11 illustre la réalisation d'une armature de renfort dont le pas des barres est à droite mais on peut de la même façon réaliser un pas à gauche par exemple en modifiant l'orientation, par rapport à l'axe du noyau, des ensembles d'alimentation et en modifiant le sens soit de translation, soit de rotation du noyau.

Dans le procédé de toronnage préféré et illustré par les figures 10 et 11, la libération des barres du support s'effectue avant que les barres atteignent le noyau. On ne sortira pas du cadre de la présente invention en enlevant le support des barres une fois l'ensemble unitaire poser sur le noyau.

Si les barres sont séparées avant qu'elles atteignent l'armature, celles-ci pourront l'être soit par l'intérieur soit par l'extérieur des barres.

On ne sortira pas du cadre de la présente invention en cintrant des groupes de barres placées dans un support, comme on pourrait le faire avec des barres de renfort métalliques rassemblées sur un support.

Le support utilisé pour le regroupement des barres pourra maintenir les barres soit sur toute leur longueur soit sur certains tronçons de leur longueur. Dans ce dernier cas le support est donc composé de plusieurs éléments disjoints qui maintiennent l'orientation et le groupage de toutes les barres.

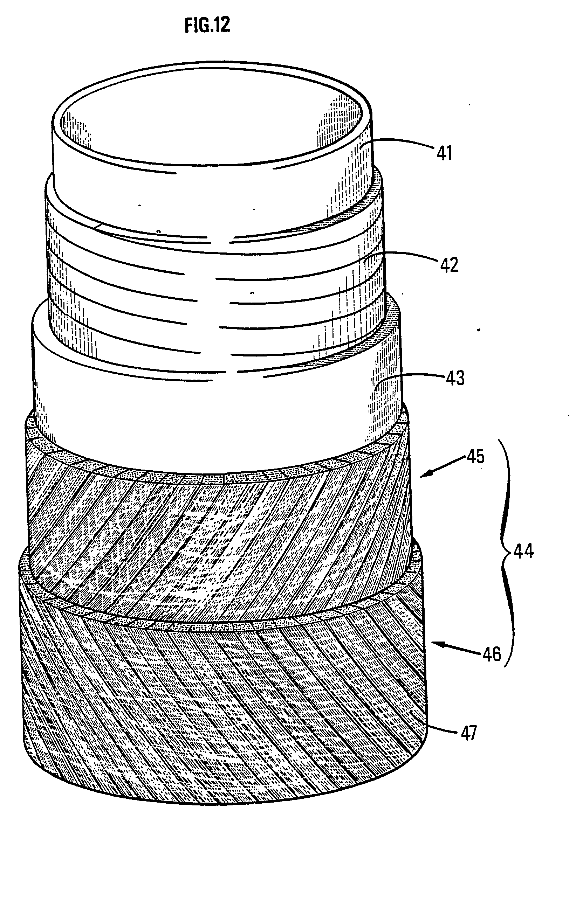

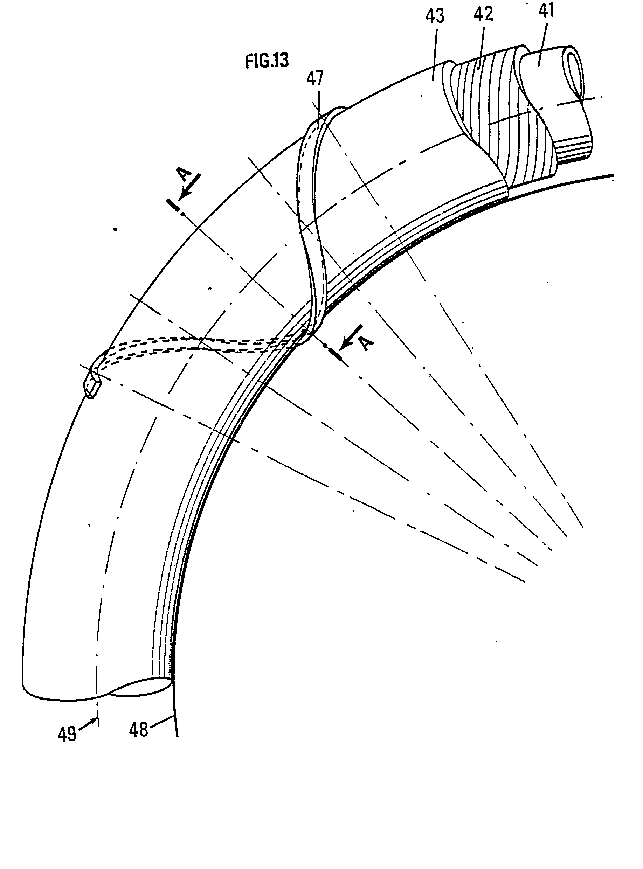

La figure 12 représente un type de conduite flexible étanche, pouvant être soumise à des efforts de traction importants, dans laquelle l'armature de résistance à la traction est réalisée selon l'art antérieur.

Cette conduite est composée, de l'intérieur vers l'extérieur, par:

— une gaine interne souple ou âme tubulaire 41, par exemple en un matériau plastique tel qu'un élastomère,

— une armature métallique flexible 42 entourant l'âme tubulaire 41 et résistant aux efforts engendrés par les pressions régnant à l'intérieur et à l'extérieur de la conduite flexible; celle-ci peut être par exemple constituée par enroulement hélicoïdal, à faible pas, d'un profilé auto-agrafable ayant une section en forme de S ou de Z,

— une gaine souple et étanche 43, constituée d'un matériau plastique tel qu'un élastomère et recouvrant l'armature 42, de sorte que la pression régnant à l'extérieur de la conduite ne puisse agir directement sur l'âme tubulaire 41,

— et une armature 44 de résistance à la traction. L'armature 44 de résistance à la traction est composée de deux nappes 45 et 46 enroulées hélicoïdalement et en sens inverses avec un grand pas d'enroulement.

Selon l'art antérieur, chaque nappe est constituée par une pluralité de fils ou torons ou encore, comme représenté sur la figure 12, par des barres profilées préformées 47. Ce barres profilées peuvent; par exemple, avoir une section en forme de S ou de Z pour donner une meilleure stabilité à la nappe de renfort qu'elles constituent. Le brevet français FR-A-2.210.266 enseigne que la plus grande dimension de la section de ces barres, lorsqu'elles sont rectangulaires soit, disposée suivant un rayon de la conduite flexible, ou plus généralement que le moment d'inertie de la section droite par rapport à une perpendiculaire au rayon passant par le centre de gravité soit plus grand que tous les autres relativement à des droits passant par le centre de gravité de la section droite.

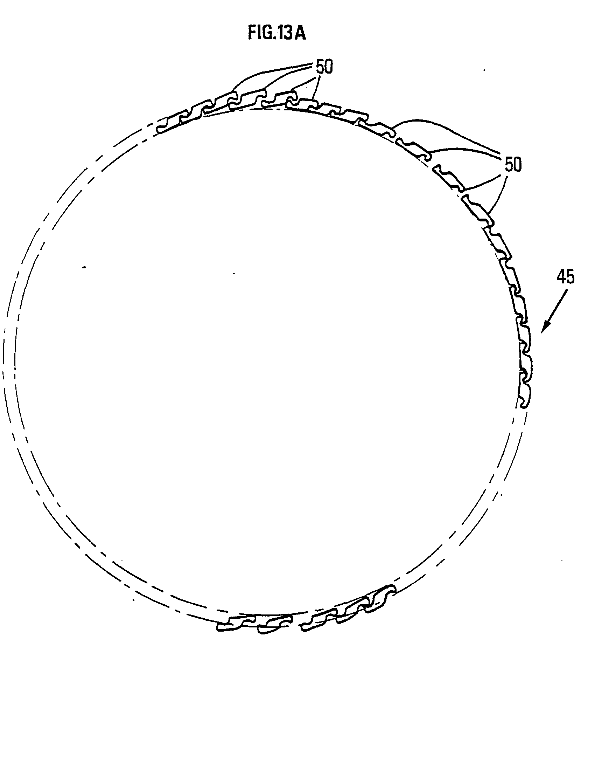

Ceci permet d'empêcher les désorganisations de nappe lors des essais en flexion des conduites flexibles renforcées comme montré aux figures 13 et 13A.

La figure 13 représente schématiquement ou en perspective, la déformation théorique d'une des barres profilées 47 d'une armature de résistance à la traction lorsque la conduite flexible est soumise à des efforts de flexion, notamment lors de son passage autour d'une poulie 48.

On voit qu'au-dessous de la fibre neutre 49, représentée en trait mixte, les génératrices de la conduite flexible sont comprimées tandis que les longueurs des génératrices situées au niveau de la fibre neutre 49 ne sont pas modifiées.

Il s'ensuit que, comme on peut le constater sur la figure 13, une spire formée par une barre profilée 47, située dans la zone de flexion, a un pas d'enroulement dont la valeur, comparée à celle de ce pas d'enroulement lorsque la conduite est rectiligne, doit être inférieure dans la zone comprimée de la conduite et supérieure dans la zone d'extension de la conduite et cela d'autant plus que le rayon de courbure de la conduite est plus réduit.

La figure 13A, qui est la section AA de la figure 13, illustre schématiquement les désorganisations de profilés auto-agrafables 50 et ne présentant pas les caractéristiques du brevet français FR-A-2.210.266. Sur cette figure seule la nappe 45 de résistance aux efforts de traction a été représentée.

Avec de telles barres, cette instabilité et les risques de vrillage de ces barres profilées constituant l'armature de résistance à la traction peuvent conduire d'abord au dégrafage local des profilés entre eux sans possibilité de réagrafage si les barres sont agrafables les unes aux autres (une des solutions proposées dans l'art antérieur), ensuite à la désorganisation des nappes de renfort et enfin à l'éventration des conduites.

Pour conserver la flexibilité de la conduite une telle condition d'agencement implique un plus grand nombre de barres de renfort et de ce fait des inconvénients liés à la fabrication des barres, à la fabrication des conduites et leur productivité. Aussi l'invention trouve notamment dans cette utilisation particulière un intérêt particulier, en proposant un profilé multibarre qui remédie aux inconvénients cités.

Le profilé multibarre comporte une pièce-support dans laquelle sont placées les différentes barres de renfort. Ces barres pouvant être totalement ou partiellement ou pas solidaires de la pièce-support.

L'immobilisation peut être effectuée par n'importe quel procédé tel collage ou ancrage mécanique avec la pièce-support qui peut être réalisée en matière plastique souple.

En effet, selon le mode préféré de réalisation, le profilé constitutif de l'armure de renfort de corps renforcés, comporte des barres de renfort en matériau composite et sert à la fois comme moule pour leur fabrication et comme support pour leur manutention et leur pose et n'entrave pas le bon fonctionnement des corps renforcés par ces profilés multibarres. De ce fait, la pièce-support composant le profilé multibarre sera nommée le moule-support.

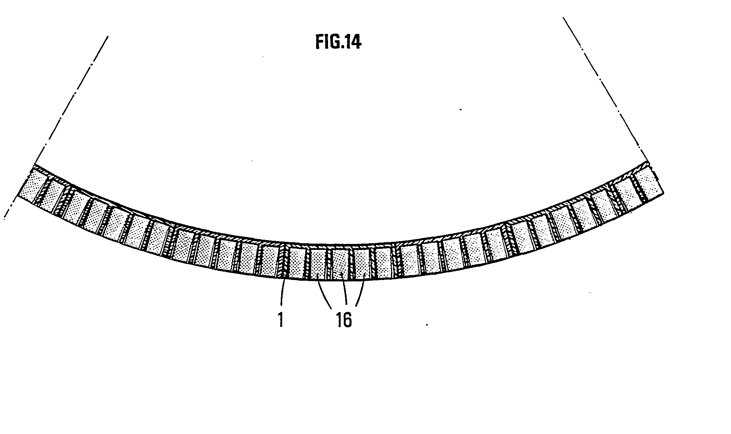

La figure 14 représente en section une partie d'une nappe de l'armature de résistance à la traction d'une conduite flexible composée de profilés multibarres selon l'invention.

Les profilés multibarres composés du moule-support 1 garni des barres de renfort 16 sont disposés tout autour de la couche interne la plus externe à la conduite en fabrication, leur embase dirigée soit vers l'intérieur soit vers l'extèrieur de la conduite. Bien entendu le profilé pourra être à son tour recouvert d'autres nappes soit de renfort soit ayant d'autres destinations telle l'étanchéïté.

Les profilés multibarres peuvent aussi bien être utilisés dans la constitution d'armatures de renfort résistant aux efforts de traction comme pour des armatures résistant aux effets de la composante circonférentielle de la différence des pressions entre l'intérieur et l'extérieur de la conduite.

Dans les nappes de renforts résistant à la pression comme pour celles résistant à la traction on pourra utiliser tous les types de profilés multibarres, comme par exemple ceux décrits et illustrés par les figures 3, 4, 5, 7.

On ne sortira pas du cadre de la présente invention si les barres de renfort sont réalisées dans une autre matiére qu'un matériau stabilisable. En effet, on pourrait très bien réaliser des corps allongés avec au moins un profilé multibarre armé d'au moins une barre en métal.

## Revendications

1. Procédé de fabrication en continu de barres de renfort incurvées profilées (16) à section constante ou non constante en matière stabilisable armée produites à l'intérieur d'un moule-support profilé (1) que l'on enroule autour d'un mandrin (3) et dans lequel on dispose des éléments de renforcement imprégnès de résine stabilisable (11), puis on procède à la stabilisation de ladite résine sur au moins une partie de la longueur dudit mandrin, caractérisé en ce que ledit moule-support comporte plusieurs gorges (17) dans lesquelles on dispose lesdits éléments de renforcement imprégnés de résine stabilisable (11), produisant ainsi plusieurs barres incurvées à section profilée en matière stabilisable armée simultanément sur le même mandrin (3).

2. Procédé selon la revendication 1 caractérisé en ce que l'on utilise des moyens permettant auxdites barres, une fois produites et encore placées dans ledit moule-support, d'avoir un déplacement relatif entre-elles.

3. Procédé selon la revendication 1, caractérisé en ce que l'on dégage lesdites barres dudit moule-support profilé aprés leur stabilisation et en ce que l'on utilise un moule-support adapté au dégagement desdites barres.

4. Procédé selon la revendication 1, caractérisé en ce que ladite matière stabilisable composant les barres est formulée pour adhérer à la paroi interne d'au moins une gorge dudit moule.

5. Procédé selon la revendication 1, caractérisé en ce que ladite matière stabilisable est formulée pour ne pas adhèrér à certaines des parois internes des gorges dudit moule.

6. Procédé selon la revendication 1 utilisant un moule-support constitué de deux pièces superposées, caractérisé en ce que l'on sépare l'une de l'autre lesdites deux pièces après avoir réalisé la stabilisation au moins partielle de la résine desdites barres incurvées.

7. Moule-support profilé (1) pour fabriquer en continu des barres (16) incurvées à section profilée en matière stabilisée armée produites à l'intérieur de ce moule-support dans lequel on dispose des éléments de renforcement imprégnés de résine stabilisable (11), ledit moule-support étant enroulé autour d'un mandrin (3) et la stabilisation de ladite résine étant réalisée sur au moins une partie de la longueur dudit mandrin, caractérisé en ce que ledit moule-support profilé est composé de plusieurs gorges (17) sensiblement parallèles, ayant des sections respectives correspondant à celles des différentes barres profilées (16) à obtenir simultanément.

8. Moule-support profilé selon la revendication 7 caractérisé en ce qu'il comporte au moins une gorge plus haute que large.

9. Procédé de pose en continu des armatures de renforcement (31) de corps allongés flexibles, lesdites armatures étant constituées de plusieurs barres de renfort cintrées, caractérisé en ce qu'on alimente la machine de pose avec au moins un ensemble unitaire composé de plusieurs barres groupées sur un support (32) et en ce qu'on procède à l'enlèvement dudit support au cours de la pose desdites plusieurs barres pour la formation de ladite armature (Figs 10 et 11).

10. Procédé selon la revendication 9, caractérisé en ce qu'on tend les barres avant et au cours de leur pose, et caractérisé en ce qu'on effectue la séparation des barres dudit support dans une zone où les barres, sorties dudit support ou présentes dans ledit support, sont tendues (Figs 10 et 11).

11. Procédé selon la revendication 9, caractérisé en ce qu'avant d'alimenter la machine de pose avec l'ensemble unitaire, on groupe lesdites barres composant ledit ensemble sur un support.

12. Dispositif pour poser en continu les armatures de renforcement de corps allongés flexibles, caractérisé en ce qu'il comporte au moins un ensemble unitaire composé de plusieurs barres de renfort (31) regroupées par un support (32), et en ce que ledit dispositif comporte des moyens (32, 34, 35) permettant de séparer lesdites barres de renfort du support.

13. Dispositif selon la revendication 12, caractérisé en ce que ledit dispositif comporte des moyens (35) pour stocker ledit support une fois qu'il a été utilisé pour la pose, caractérisé en ce que ledit dispositif comporte des moyens de stockage et d'alimentation (35, 36) dudit ensemble unitaire pour la pose de ses barres, et en ce que ledit dispositif comporte des moyens de tension des barres au cours de leur pose.

14. Corps allongé flexible comportant au moins un élément profilé allongé cintré armé, caractérisé en ce que ledit élément comporte une piéce-support (1) comprenant plusieurs gorges (17) sensiblement parallèles entre elles s'étendant dans le sens longitudinal dudit élément profilé, au moins deux desdites gorges comportant chacune une barre de renfort (16) comprenant elle-même des filaments noyés dans une matiére stabilisée (11), ladite pièce-support étant enroulée en hélice (Fig. 14).

15. Corps allongé flexible selon la revendication 14, caractérisé en ce que lesdites barres sont adaptées à se déplacer relativement entreelles lors d'une utilisation dudit corps allongé flexible.

16. Corps allongé flexible selon la revendication 14, caractérisé en ce que l'élément profilé comporte des moyens d'immobilisation rendant solidaire au moins une desdites barres de ladite gorge et en ce que lesdits moyens d'immobilisation perdent leur efficacité au-delà d'un certain seuil d'effort.

17. Corps allongé flexible selon la revendication 14, caractérisé en ce que ledit élément profilé comporte des moyens de glissement d'au moins une desdites barres relativement à ladite pièce-support.

18. Corps allongé flexible selon la revendication 14, caractérisé en ce qu'au moins une desdites barres est solidarisée de ladite pièce-renfort selon une ou plusieurs zones d'une surface verticale ou horizontale d'une gorge de ladite pièce-renfort, cette ou ces zones s'étendant longitudinalement dans la pièce-renfort de façon continue ou discontinue.

19. Elément profilé de renforcement comportant une pièce-support, caractérisé en ce que ladite pièce-support comprend plusieurs gorges sensiblement parallèles entre-elles s'étendant dans le sens longitudinal dudit élément profilé, au moins deux desdites gorges comportant chacune une barre de renfort, et en ce que lesdites barres comportent des moyens adaptés au déplacement relatif desdites barres entre-elles lors d'une utilisation dudit élément profilé.

20. Moule-support selon la revendication 7, caractérisé en ce qu'il est adapté à servir de support pour la mise en oeuvre du procédé de pose selon la revendication 9, ou à servir de pièce-support pour le groupement de barres dans la constitution des corps allongés flexibles selon la revendication 14.

**Patentansprüche**

1. Verfahren zur kontinuierlichen Herstellung von gekrümmten profilierten Verstärkungsstäben (16) konstanten oder nicht konstanten Querschnitts aus stabilisierbarem armiertem Material, die im Inneren einer profilierten Trägerform (1) erzeugt werden, die man um einen Dorn (3) wickelt und in der man mit stabilisierbarem Harz (11) imprägnierte Verstärkungselemente anordnet, dann zur Stabilisation dieses Harzes auf wenigstens einem Teil der Länge des Dorns übergeht, dadurch gekennzeichnet, daß die Trägerform mehrere Nuten (17) umfaßt, in denen man diese mit stabilisierbarem Harz (11) imprägnierten Verstärkungselemente anordnet und so mehrere gekrümmte Stäbe mit Profilquerschnitt aus stabilisierbarem armiertem Material gleichzeitig auf dem gleichen Dorn (3) erzeugt.

2. Verfahren nach Anspruch 1, dadurch gekennzeichnet, daß man Mittel verwendet, die es diesen einmal erzeugten und noch in diesem Formträger angeordneten Stäben ermöglicht, untereinander eine Relativbewegung zu erfahren.

3. Verfahren nach Anspruch 1, dadurch gekennzeichnet, daß man diese Stäbe von der profilierten Trägerform nach ihrer Stabilisierung freigibt und daß man eine auf die Freigabe dieser Stäbe ausgelegte Trägerform verwendet.

4. Verfahren nach Anspruch 1, dadurch gekennzeichnet, daß das die Stäbe bildende stabilisierbare Material von einer Rezeptur derart ist, daß es an der Innenwand wenigstens einer Nut dieser Form haftet.

5. Verfahren nach Anspruch 1, dadurch gekennzeichnet, daß dieses stabilisierbare Material von einer Rezeptur derart ist, daß es an gewissen der Nuteninnenwände dieser Form nicht haftet.

6. Verfahren nach Anspruch 1 unter Verwendung eines aus zwei überlagerten Teilen bestehenden Formträgers, dadurch gekennzeichnet, daß man diese beiden Teile voneinander trennt, nachdem man die wenigstens teilweise Stabilisierung des Harzes dieser gekrümmten Stäbe herbeigeführt hat.

7. Profilformträger (1) zur kontinuierlichen Herstellung der gekrümmten Stäbe (16) mit Profilquerschnitt aus stabilisiertem armiertem Material, die im Inneren dieses Formträgers hergestellt wurden, in welchem man mit stabilisierbarem Harz (11) imprägnierte Verstärkungselemente anordnet, wobei dieser Formträger um einen Dorn (3) gewickelt ist und die Stabilisierung dieses Harzes auf wenigstens einem Teil der Länge des Trägers herbeigeführt ist, dadurch gekennzeichnet, daß dieser Profilformträger sich aus mehreren im wesentlichen parallelen Nuten (17) zusammensetzt, deren jeweilige Querschnitte denen der verschiedenen gleichzeitig zu erhaltenden Profilstäbe (16) entspricht.

8. Profilformträger nach Anspruch 7, dadurch gekennzeichnet, daß er wenigstens eine Nut, die höher als breit ist, umfaßt.

9. Verfahren zum kontinuierlichen Legen von Verstärkungsarmierungen (31) langgestreckter flexibler Körper, wobei die Armierungen aus mehreren gewölbten Verstärkungsstäben aufgebaut sind, dadurch gekennzeichnet, daß man die Verlegemaschine mit wenigstens einer Einheitsanordnung speist, die aus mehreren auf einem Träger (32) gruppierten Stäben zusammengesetzt ist und daß man die Entfernung dieses Trägers während des Ablegens dieser mehreren Stäbe zur Bildung dieser Armierung (Fig. 10 und 11) vornimmt.

10. Verfahren nach Anspruch 9, dadurch gekennzeichnet, daß man die Stäbe vor und während ihres Verlegens spannt und daß man die Trennung der Stäbe von diesem Träger in einer Zone vornimmt, wo die aus dem Träger ausgetretenen oder in diesem Träger vorhandenen Stäbe gespannt sind (Fig. 10 und 11).

11. Verfahren nach Anspruch 9, dadurch gekennzeichnet, daß vor dem Speisen der Maschine mit der Einheitsanordnung man diese diese Anordnung bildenden Stäbe auf einem Träger gruppiert.

12. Vorrichtung zum kontinuierlichen Ablegen der Verstärkungsarmierungen langgestreckter flexibler Körper, dadurch gekennzeichnet, daß sie wenigstens eine Einheitsanordnung bestehend aus mehreren auf einem Träger (32) gruppierten Verstärkungsstäben (31) umfaßt und daß die Vorrichtung Mittel (32, 34, 35) umfaßt, die es ermöglichen, diese Verstärkungsstäbe des Trägers zu trennen.

13. Vorrichtung nach Anspruch 12, dadurch gekennzeichnet, daß die Vorrichtung Mittel (35) umfaßt, um diesen Träger, sobald er einmal zum Ablegen verwendet worden ist, zu speichern, daß diese Vorrichtung Mittel zum Speichern und Speisen (35, 36) dieser Einheitsanordnung zum Ablegen dieser Stäbe umfaßt und daß diese Vorrichtung Mittel zum Spannen der Stäbe während ihres Ablegens aufweist.

14. Langgestreckter flexibler Körper mit wenigstens einem länglichen armierten gewölbten Profilelement, dadurch gekennzeichnet, daß dieses Element ein Trägerbauteil (1) umfaßt, das mehrere untereinander im wesentlichen parallele Nuten (17) aufweist, die sich in Längsrichtung dieses Profilelementes erstrecken, wobei wenigstens zwei dieser Nuten je einen Verstärkungsstab (16) umfassen, der selbst in ein stabilisiertes Material (11) eingebettete Drähte oder Fäden umfaßt und wobei dieses Trägerbauteil schraubenartig (Fig. 14) gewickelt ist.

15. Langgestreckter flexibler Körper nach Anspruch 14, dadurch gekennzeichnet, daß diese Stäbe so ausgelegt sind, daß sie sich relativ zueinander bei einer Verwendung dieses flexiblen langgestreckten Körpers verschieben.

16. Langgestreckter flexibler Körper nach Anspruch 14, dadurch gekennzeichnet, daß das Profilelement Mittel zum Unbeweglichmachen umfaßt, die wenigstens einen dieser Stäbe bezüglich dieser Nut festlegen und daß diese Mittel zum Unbeweglichmachen ihre Wirksamkeit jenseits einer gewissen Schwellenbeanspruchung verlieren.

17. Langgestreckter flexibler Körper nach Anspruch 14, dadurch gekennzeichnet, daß dieses Profilelement Mittel umfaßt, um wenigstens einen dieser Stäbe relativ zu diesem Trägerbauteil gleiten zu lassen.

18. Langgestreckter flexibler Körper nach Anspruch 14, dadurch gekennzeichnet, daß wenigstens einer dieser Stäbe fest bezüglich des Verstärkungsstücks entsprechend einer oder mehrerer Zonen einer Vertikaloder Horizontalfläche einer Nut dieses Verstärkungsstücks ist, wobei diese Zone(n) sich in Längsrichtung in dem Verstärkungsbauteil kontinuierlich oder diskontinuierlich erstreckt bzw. erstrecken.

19. Verstärkungsprofilelement mit einem Trägerstück, dadurch gekennzeichnet, daß dieses Trägerstück mehrere im wesentlichen zueinander parallele Nuten umfaßt, die sich in Längsrichtung dieses Profilelementes erstrecken, wobei wenigstens zwei dieser Nuten je einen Verstärkungsstab umfassen und daß diese Stäbe Mittel umfassen, die für die Relativverschiebung dieser Stäbe untereinander bei einer Verwendung dieses Profilelementes ausgelegt sind.

20. Trägerform nach Anspruch 7, dadurch gekennzeichnet, daß sie so ausgelegt ist, daß sie als Träger für die Durchführung des Verlegeverfahrens nach Anspruch 9 dient oder als Trägerstück für die Gruppierung von Stäben beim Aufbau der länglichen flexiblen Körper nach Anspruch 14 dient.

**Claims**

1. Method for the continuous manufacture of profiled and curved reinforcing bars (16) of constant or non constant section and made from a reinforced material capable of stabilisation and produced inside a profiled supporting mould (1), this being wound onto a mandrel (3) and in which are arranged reinforcing elements impregnated with a resin capable of stabilisation (11), the said resin then being stabilised over at least one part of the length of the said mandrel, characterised in that the said supporting mould includes several channels (17) in which are located the said reinforcing elements impregnated with the resin capable of stabilisation (11) and producing, in this way, several curved bars of profiled section made from a material capable of stabilisation and simultaneously reinforced on the same mandrel (3).

2. Method in accordance with claim 1, characterised in that a means is used which permits the said bars, when produced and still located in the said supporting mould, to achieve a relative displacement between the said bars.

3. Method in accordance with claim 1, characterised in that the said bars are released from the said profiled supporting mould following their stabilisation and in that a supporting mould designed to permit the release of the said bars is used.

4. Method in accordance with claim 1, characterised in that the said material capable of stabilisation and comprising the said bars is formulated to adhere to the inner wall of at least one channel forming part of the said mould.

5. Method in accordance with claim 1, characterised in that the said material capable of stabilisation is formulated so that it does not adhere to certain of the internal walls of the channels forming part of the said mould.

6. Method in accordance with claim 1, using a supporting mould comprising two superimposed parts, characterised in that the said two parts are separated following at least partial stabilisation of the resin for the said curved bars.

7. Profiled supporting mould (1) for the continuous manufacture of profiled and curved reinforcing bars (16), made from a reinforced and stabilised material produced inside the said supporting mould in which are arranged reinforcing elements impregnated with a resin capable of stabilisation (11), the said supporting mould being wound onto a mandrel (3) and stabilisation of the said resin being carried out over at least part of the length of the said mandrel, characterised in that the said profiled supporting mould comprises several channels (17) which are basically parallel, with sections corresponding respectively to those of the different profiled bars (16) to be produced simultaneously.

8. Profiled supporting mould in accordance with claim 7, characterised in that it includes at least one channel with a height greater than its width.

9. Method for the continuous placing of reinforcements (31) for flexible elongated bodies, the said reinforcements comprising several curved reinforcing bars, characterised in that the placing machine is supplied with at least one unit assembly comprising several bars grouped onto a support (32) and in that the said support is removed while the said several bars are being placed, in order to form the said reinforcement (Figures 10 and 11).

10. Method in accordance with claim 9 characterised in that the bars are tensioned before and while they are placed and characterised in that the bars are separated from the said support in a zone where the bars, on leaving the said support or when presented to the said support, are tensioned (Figures 10 and 11).

11. Method in accordance with claim 9, characterised in that, before supplying the placing machine with the unit assembly, the said bars comprising the said assembly are grouped on a support.

12. Device for continuous placing of reinforcements for flexible elongated bodies, characterised in that it includes at least one unit assembly comprising several reinforcing bars (31) grouped on a support 32 and in that the said device comprises a means (32, 34, 35) to permit the said reinforcing bars to be separated from the support.

13. Device in accordance with claim 12 characterised in that the said device includes a means (35) for storing the said support when it has been used for the placing machine, characterised in that the said device includes a means of storage and supply (35, 36) for the said unit assembly in order to place the said bars and in that the said device includes a means of tensioning the bars while being placed.

14. Flexible elongated body comprising at least one curved and reinforced elongated element, characterised in that the said element includes a supporting part (1) comprising several channels (17) basically parallel and extending in the longitudinal direction of the said profiled element, at least two of the said channels each including a reinforcing bar (16), itself comprising filaments embedded in a stabilised material (11), the said supporting part being wound in the form of a helix (Figure 14).

15. Flexible elongated body in accordance with claim 14, characterised in that the said bars are designed to be displaced relative to each other when the said flexible elongated body is in use.

16. Flexible elongated body in accordance with claim 14, characterised in that the profiled element includes a means of immobilisation which holds at least one of the said bars in the said channel and in that the said means of immobilisation loses its efficiency after exceeding a certain force threshold.

17. Flexible elongated body in accordance with claim 14, characterised in that the said profiled element includes a means of sliding at least one of the said bars relative to the said supporting part.

18. Flexible elongated body in accordance with claim 14, characterised in that at least one of the said bars forms an integral part of the said reinforcing part, in accordance with one or more zones of a vertical or horizontal surface forming part of a channel in the said reinforcing part, this zone or zones extending longitudinally in the said reinforcing part, in a continuous or discontinuous manner.

19. Profiled reinforcement element comprising a supporting part, characterised in that the said supporting part includes several channels which are basically parallel to each other end extending in the longitudinal direction of the said profiled element, at least two of the said channels each including a reinforcing bar and in that the said bars include a means designed to permit displacement of the said bars relative to each other when the said profiled element is in use.

20. Supporting mould in accordance with claim 7, characterised in that it is designed to act as a support in order to apply the method of placing in accordance with claim 9, or to act as a supporting part in order to group together bars when producing flexible elongated bodies in accordance with claim 14.

**FIG.1**

EP 0 263 860 B1

**FIG.2**

**FIG.3**

**FIG.4**

EP 0 263 860 B1

**FIG.5**

16    15a

1

3

**FIG.6**

1    17    19

18

**FIG.7**

20    20

**FIG.8**

21    21

1

**FIG.9**

22

1

**FIG.10**

**FIG.11**

## FIG.12

FIG.13

**FIG.13A**

## FIG.14

1    16